# EUROPEAN PATENT APPLICATION

(11) **EP 4 851 476 A1**
(43) Date of publication of application: **09.12.2026**
(21) Application number: 26182703.4
(22) Date of filing: 02.06.2026
(51) Int. Cl.: F16D 48/06

(54) **LEANING VEHICLE**

(30) Priority: 04.06.2025 JP 2025093741
(71) Applicant: Yamaha Hatsudoki Kabushiki Kaisha, Iwata-shi, Shizuoka 438-8501 (JP)
(72) Inventor: OHATA, Shinobu, Iwata-shi, Shizuoka, 438-8501 (JP)
(74) Representative: Stöckeler, Ferdinand

(57) **Abstract**

The present teaching aims to provide a leaning vehicle capable of keeping a grip recovery period associated with upshift short in a situation in which a rear wheel is slipping in a special environment, such as racing, while suppressing an increase in a period in which driving force is not transmitted to the rear wheel in the upshift. When a dog transmission upshifts, a control device of a leaning vehicle switches an engine control mode or a clutch control mode for an operation for reducing transmission driving force according to a slip response state indicating detection of slip of a rear wheel or the transition to a control state assuming slip by an operation, when the leaning vehicle is not in the slip response state, the control device causes a clutch actuator to maintain a connection state of a clutch and reduce the driving force of an engine to thereby disengage dogs in the engine control mode, and when the leaning vehicle is in the slip response state, the control device causes the clutch actuator to change the state of the clutch from the connection state to reduce the transmission driving force to thereby eliminate the slip of the rear wheel and disengage the dogs in a clutch control mode.

## Description

### Technical Field

The present teaching relates to a leaning vehicle.

### Background Art

PTL 1 describes a motorcycle which is a leaning vehicle, for example. The motorcycle of PTL 1 includes a dog clutch automatic transmission. A control device of the dog clutch automatic transmission reduces torque of a power source when dogs are disengaged in gear shifting. The decrease in the torque of the power source causes a decrease in force applied to the dogs, enabling the dog disengagement. The control device recovers the reduced torque of the power source after the dog disengagement has been completed.

### Citation List

### Patent Literature

PTL 1: WO 2023/112324

### Summary of Invention

### Technical Problem

The leaning vehicle is sometimes demanded to keep a grip recovery period associated with upshift short in a situation in which a rear wheel is slipping in a special environment, such as racing, while suppressing an increase in a period in which driving force is not transmitted to the rear wheel in the upshift.

It is an object of the present teaching to provide a leaning vehicle capable of keeping a grip recovery period associated with upshift short in a situation in which a rear wheel is slipping in a special environment, such as racing, while suppressing an increase in a period in which driving force is not transmitted to the rear wheel in the upshift.

### Solution to Problem

A traveling method for the leaning vehicle includes a method in which a rear wheel which is a driving wheel is caused to slip relative to the road surface. For example, when an off-road vehicle is cornering on a dirt road surface in a special environment, such as racing, there is power sliding in which the vehicle travels in a lean attitude while intentionally causing the rear wheel to slip with the throttle open. By causing the rear wheel to slip, the vehicle body orientation can be turned in a short time while suppressing a decrease in speed. Without being limited to the cornering, there is also a traveling method in which the speed is increased by outputting a large driving force from a power source to the extent that the rear wheel is caused to slip.

The leaning vehicle is sometimes demanded to upshift even in a situation in which the rear wheel is slipping.

The rear wheel in the slip state is rotating while slipping relative to the road surface while being subjected to resistance caused by frictional force from the road surface and subjected to driving force overcoming this frictional force. A dog transmission transmits this driving force to the rear wheel. More specifically, transmission driving force is applied to engaged dogs. The dogs of the dog transmission cannot be disengaged in such a state in which the transmission driving force is applied.

When the transmission driving force is reduced so that the dogs can be disengaged, the slip is suppressed during the period in which the transmission driving force is reduced, so that the grip of the rear wheel is recovered. For example, when the leaning vehicle is power sliding in a lean attitude, the recovery of the grip causes the leaning vehicle to rise. This suspends the power sliding.

The present inventors have found that there is a difference in both the cause and the period between a failure of the driving force to be transmitted to the rear wheel and the recovery of the grip by the suppression of the slip of the rear wheel. Based on this finding, the present inventors have conceived that, when the dog transmission upshifts, the grip recovery period associated with the upshift in a situation in which the rear wheel is slipping can be kept short by switching between an engine control mode and a clutch control mode for an operation for reducing the transmission driving force according to a slip response state indicating detection of the slip of the rear wheel or transition to a control state assuming slip by an operation.

More specifically, when the leaning vehicle is not in the slip response state, the control device performs the operation for reducing the transmission driving force in the engine control mode. The control device causes a clutch actuator to maintain a connection state of the clutch and reduce the driving force of the engine to thereby disengage the dogs in the engine control mode. In the engine control mode, the decrease in the driving force of the engine causes a decrease in the transmission driving force transmitted through the engaged dogs. When the rear wheel is not slipping, the leaning vehicle before the driving force of the engine decreases is moving at a speed corresponding to the rotation speed of the rear wheel driven by the engine. More specifically, the rear wheel driven by the engine is rotating at a speed corresponding to the vehicle speed of the leaning vehicle. Therefore, when the driving force of the engine decreases, the rotation speed of the rear wheel changes to be lower than the speed corresponding to the vehicle speed of the leaning vehicle in a short time. Thus, the transmission driving force of the dogs immediately decreases in response to the decrease in the driving force of the engine. The decrease in force applied to the engaged dogs enables the disengagement of the dogs. The control device can recover the reduced driving force of the engine. The engine control mode suppresses the increase in the period from the start of the decrease in the driving force of the engine to the recovery of the driving force of the engine, i.e., the period in which the driving force is not transmitted to the rear wheel.

When the leaning vehicle is in the slip response state, the control device performs the operation for reducing the transmission driving force in the clutch control mode. The control device causes the clutch actuator to change the state of the clutch from the connection state to reduce the transmission driving force to thereby disengage the dogs in the clutch control mode. When the rear wheel is slipping, there is a large speed difference between the rotation speed of the rear wheel before the decrease in the transmission driving force starts and the speed corresponding to the vehicle speed of the leaning vehicle, e.g., the rotation speed of a front wheel. The rear wheel is rotating while slipping at a speed higher than the speed corresponding to the vehicle speed under the driving force of the engine received through the dogs. When the rotation speed of the rear wheel becomes less than or equal to the speed corresponding to the vehicle speed, the transmission driving force of the dogs decreases to the extent that the disengagement is enabled. In the clutch control mode, the disconnection of the clutch causes a rapid decrease in the transmission driving force transmitted through the dogs. The rotation speed of the rear wheel rapidly decreases to fall below the speed corresponding to the vehicle speed, so that the force applied to the engaged dogs rapidly decreases. This enables the disengagement of the dogs.

In a situation in which the rotation speed of the rear wheel decreases, the slip of the rear wheel decreases toward elimination. The decrease in the slip of the rear wheel means the recovery of the grip of the rear wheel. For example, when the leaning vehicle upshifts in the power sliding situation, the recovery of the grip of the rear wheel causes the leaning vehicle to rise from the lean state toward an upright position.

The engine, which supplies the driving force to the dog transmission, itself has inertia. Therefore, when the connection state of the clutch is maintained in the engine control mode, the decrease amount of the speed i.e., deceleration, of the rear wheel is kept small due to the inertia even when the driving force of the engine decreases. This prolongs the period until the rotation speed of the rear wheel becomes less than or equal to the speed corresponding to the vehicle speed. This prolongs the period in which the leaning vehicle rises from the lean state, for example.

In contrast, when the state of the clutch is changed from the connection state in the clutch control mode, the transmission driving force transmitted by the dogs is released from the inertia of the engine, resulting in a large deceleration.

The rate at which the transmission driving force decreases in the clutch control mode is higher than the rate at which the transmission driving force decreases in the engine control mode, and therefore the clutch control mode can shorten the grip recovery period. This shortens the period in which the leaning vehicle rises from the lean state, for example.

Thus, when the leaning vehicle is not in the slip response state, the engine control mode suppresses the increase in the period in which the driving force is not transmitted to the rear wheel in the upshift, and, when the leaning vehicle is in the slip response state in a special environment, such as racing, the clutch control mode can keep the grip recovery period associated with the upshift shorter.

To achieve the above-described object, a leaning vehicle has the following configuration according to one aspect of the present teaching.
(1) A leaning vehicle including:
   an engine configured to output driving force;
   a front wheel;
   a rear wheel configured to rotate under the driving force of the engine;
   a clutch having a clutch actuator and configured to change the state of the driving force between a connection state and a disconnection state by actuation of the clutch actuator;
   a dog transmission configured to upshift by engaging and disengaging dogs and transmit the driving force transmitted from the clutch as transmission driving force to the rear wheel through the dogs, which have been engaged; and
   a control device configured to control the engine and the clutch actuator, in which
   when the dog transmission upshifts, the control device is configured to switch between an engine control mode and a clutch control mode for an operation for reducing the transmission driving force according to a slip response state indicating detection of slip of the rear wheel or transition to a control state assuming slip by an operation,
   when the leaning vehicle is not in the slip response state, the control device is configured to cause the clutch actuator to maintain a connection state of the clutch and reduce the driving force of the engine to thereby disengage the dogs in the engine control mode, and
   when the leaning vehicle is in the slip response state, the control device is configured to cause the clutch actuator to change the state of the clutch from the connection state to reduce the transmission driving force to thereby eliminate the slip of the rear wheel and disengage the dogs in the clutch control mode.

The leaning vehicle according to (1) includes the engine, the front wheel, the rear wheel, the clutch, the dog transmission, and the control device. The engine outputs the driving force. The rear wheel is a driving wheel. The rear wheel rotates under the driving force of the engine. The clutch has the clutch actuator. The clutch changes the state of the driving force between the connection state and the disconnection state by actuation of the clutch actuator.

The dog transmission upshifts by engaging and disengaging the dogs. The dog transmission transmits the driving force of the engine as the transmission driving force to the rear wheel through the engaged dogs.
The control device controls the engine and the clutch actuator. When the dog transmission upshifts, the control device switches between the engine control mode and the clutch control mode for the operation for reducing the transmission driving force according to the slip response state. The slip response state indicates a state in which slip of the rear wheel is detected or the transition to a control state assuming slip. The transition to the control state assuming slip is performed, for example, in response to an operation of a rider. The control state assuming slip is, for example, an off-road mode.

The control device performs the operation for reducing the transmission driving force in either the engine control mode and the clutch control mode.

When the leaning vehicle is not in the slip response state, the control device performs the operation for reducing the transmission driving force in the engine control mode. The control device causes the clutch actuator to maintain the connection state of the clutch and reduce the driving force of the engine to thereby disengage the dogs in the engine control mode. In the engine control mode, the decrease in the driving force of the engine causes a decrease in the transmission driving force transmitted through the engaged dogs. When the rear wheel is not slipping, the leaning vehicle before the driving force of the engine decreases is moving at a speed corresponding to the rotation speed of the rear wheel driven by the engine. More specifically, the rear wheel driven by the engine is rotating at a speed corresponding to the vehicle speed of the leaning vehicle. Therefore, when the driving force of the engine decreases, the rotation speed of the rear wheel changes to be lower than the speed corresponding to the vehicle speed of the leaning vehicle in a short time. Thus, the transmission driving force of the dogs immediately decreases in response to the decrease in the driving force of the engine. The decrease in the force applied to the engaged dogs enables the disengagement of the dogs. The control device can recover the reduced driving force of the engine. The engine control mode suppresses the increase in the period from the start of the decrease in the driving force of the engine to the recovery of the driving force of the engine, i.e., the period in which the driving force is not transmitted to the rear wheel.

When the leaning vehicle is in the slip response state, the control device performs the operation for reducing the transmission driving force in the clutch control mode. The control device causes the clutch actuator to change the state of the clutch from the connection state to reduce the transmission driving force to thereby eliminate the slip of the rear wheel and disengage the dogs in the clutch control mode. When the rear wheel is slipping, there is a large speed difference between the rotation speed of the rear wheel before the driving force of the engine decreases and the speed corresponding to the vehicle speed of the leaning vehicle. The rear wheel is rotating while slipping at a speed higher than the speed corresponding to the vehicle speed under the driving force of the engine received through the dogs. When the rotation speed of the rear wheel becomes less than or equal to the speed corresponding to the vehicle speed, the transmission driving force of the dogs decreases to the extent that the disengagement is enabled. In the clutch control mode, the disconnection of the clutch causes a rapid decrease in the transmission driving force transmitted through the dogs. The rotation speed of the rear wheel rapidly decreases to fall below the speed corresponding to the vehicle speed, so that the force applied to the engaged dogs rapidly decreases. This enables the disengagement of the dogs.

In a situation in which the rotation speed of the rear wheel decreases, the slip of the rear wheel decreases toward the elimination. The decrease in the slip of the rear wheel means the recovery of the grip of the rear wheel. For example, when the leaning vehicle upshifts in the power sliding situation, the recovery of the grip of the rear wheel causes the leaning vehicle to rise from the lean state toward an upright state.

The engine, which supplies the driving force to the dog transmission, itself has inertia. Therefore, when the connection state of the clutch is maintained in the engine control mode, the decrease amount of the speed i.e., deceleration, of the rear wheel is suppressed due to the inertia even when the driving force of the engine decreases. This prolongs the period until the rotation speed of the rear wheel falls below the speed corresponding to the vehicle speed. This prolongs the period in which the leaning vehicle rises from the lean state, for example.

In contrast, when the state of the clutch is changed from the connection state in the clutch control mode, the transmission driving force transmitted by the dogs is released from the inertia of the engine, resulting in a large deceleration.

The rate at which the transmission driving force decreases in the clutch control mode is higher than the rate at which the transmission driving force decreases in the engine control mode, making it possible to shorten the grip recovery period. For example, the period in which the leaning vehicle rises from the lean state is short.

Thus, when the leaning vehicle is not in the slip response state, the engine control mode suppresses the increase in the period in which the driving force is not transmitted to the rear wheel in the upshift, and, when the leaning vehicle is in the slip response state, the clutch control mode can keep the grip recovery period associated with the upshift shorter.

In the description above, the description is given using an example of the power sliding which is easy to visually understand by the lean angle. However, in a special environment, such as racing, the configuration according to (1) can keep the grip recovery period associated with the upshift short even in a situation in which the speed is increased while causing the rear wheel to slip in an upright state, for example, without being limited to the power sliding accompanied by the lean state.

The control device in the leaning vehicle according to (1) can constantly perform the switch between the engine control mode and the clutch control mode according to the slip response state. However, the switch of the clutch control mode according to the slip response state does not necessarily have to be constantly performed; for example, it is sufficient when a range where the switch of the clutch control mode according to the slip response state is performed is present in the engine operation range. For example, it is sufficient when the control device according to (1) performs the switch to the clutch control mode according to the slip response state in a range in which the rotation speed of the engine is less than the speed reference, and the control device performs the engine control mode irrespective of the slip response state in a range in which the rotation speed of the engine is equal to or higher than the speed reference. Alternatively, it is sufficient when the control device according to (1) performs the switch to the clutch control mode according to the slip response state in a range in which the throttle opening is equal to or larger than the throttle opening reference, and the control device performs the engine control mode irrespective of the slip response state in a range in which the throttle opening is less than the throttle opening reference. Alternatively, it is sufficient when the control device according to (1) refers to map data in which the rotation speeds of the engine and the throttle openings are associated with each other, and, when a combination of the rotation speed of the engine and the throttle opening is within a specific range, the control device performs the switch to the clutch control mode corresponding to the slip response state, and, when the combination is outside the specific range, the control device performs the engine control mode irrespective of the slip response state.

According to one aspect of the present teaching, a leaning vehicle has the following configuration.
(2) In the leaning vehicle according to (1),
when the dog transmission upshifts, the control device is configured to cause the clutch actuator to maintain the connection state of the clutch and reduce the driving force of the engine to thereby disengage the dogs when the leaning vehicle is in the slip response state and when the rotation speed of the dog transmission exceeds a predetermined upper limit speed.

When the connection state of the clutch is released and the dogs are disengaged during slip in a state in which the rotation speed of the dog transmission exceeds the upper limit speed, the speed of the dog, which is one of the disengaged dogs and is coupled with the rear wheel, decreases as the speed of the rear wheel decelerates due to friction force between the rear wheel and the ground. The rotation of the dog, which is the other one of the dogs and coupled with the clutch, enters a free-running state because it is not affected by high resistance, such as the friction force of the ground. Thereafter, when the dog in the free-running state corresponding to a new gear stage engages with the dog having decelerated in conjunction with the rear wheel, the dogs collide with each other with a large rotation speed difference.

According to (2), when the rotation speed of the dog transmission exceeds the upper limit speed during the slip of the rear wheel, the dogs are disengaged by a decrease in the driving force of the engine while the connection state of the clutch is being maintained. This suppresses the occurrence of the collision of the dogs with a large rotation speed difference. Thus, the grip recovery period associated with the upshift in the situation in which the rear wheel is slipping can be kept short and wear of the dogs due to the collision with a large rotation speed difference can be suppressed.

According to one aspect of the present teaching, a leaning vehicle has the following configuration.

(3) The leaning vehicle according to (1) or (2), in which
the dog transmission has a shift actuator configured to engage and disengage the dogs,
the control device is configured to cause the shift actuator to upshift the dog transmission based on a shift map in which at least the rotation speeds of the engine and gear stages are associated with each other, and
the control state assuming the slip is an off-road mode in which an off-road shift map having gear shift characteristics suitable for off-road use is referred to as the shift map.

According to (3), in the off-road mode set by an operation of a rider, the actuator upshifts the dog transmission referring to the off-road shift map having gear shift characteristics suitable for off-road use. In the off-road mode, the grip recovery period associated with the upshift can be kept shorter by disengaging the dogs by reducing the transmission driving force in the clutch control mode when the leaning vehicle is in the slip response state.

The off-road shift map having gear shift characteristics suitable for off-road use is, for example, a high-speed map in which rotation speeds higher than those in a case other than the off-road mode are associated with gear stages. In the case of the high-speed map, upshift to each gear stage is caused at a rotation speed higher than that in a case other than the off-road mode, and therefore the engine easily outputs a large driving force associated with the high rotation speed, making it easy to cause slip of the rear wheel, such as power sliding. In the off-road mode, in which the wheel slip is easily caused, the grip recovery period associated with the upshift can be kept shorter by disengaging the dogs by reducing the transmission driving force in the clutch control mode when the leaning vehicle is in the slip response state.

The terminology used herein is for defining particular embodiments only and is not intended to be limiting the teaching. The term "and/or" used herein includes any and all combinations of one or two or more of the associated listed constituent components. The terms "including", "comprising", or "having", and variations thereof used herein specify the presence of stated features, steps, operations, elements, components, and/or equivalents thereof, and can include one or two or more of steps, operations, elements, components, and/or their groups. The terms "attached", "connected", "coupled", and/or equivalents thereof as used herein are used in a broad sense, and include both of direct and indirect attachment, connection, and coupling. Further, "connected" and "coupled" are not limited to physical or mechanical connections or couplings but can include direct or indirect electrical connections or couplings. All terms (including technical and scientific terms) used herein have the same meaning as commonly understood by one of ordinary skill in the art to which the present teaching belongs unless otherwise defined herein. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses the number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present invention as defined by the appended claims.

This Description describes a novel leaning vehicle. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by drawings or descriptions below.

The leaning vehicle is a straddled vehicle configured to be able to turn in a lean attitude. The straddled vehicle is a vehicle type in which a driver sits astride a saddle. The leaning vehicle is configured to turn in an attitude leaned toward the center of a curve. This enables the vehicle configured to be able to turn in a lean attitude to counter the centrifugal forces applied to the vehicle when turning. Examples of the leaning vehicle include an off-road motorcycle. The leaning vehicle is not particularly limited and may be an on-road type, a scooter type, a moped type, or even an automatic tricycle, for example.

The operation of the engine is that the engine outputs driving force generated by combustion as crankshaft torque and a rotation speed.

The dog transmission includes a multi-stage transmission in which at least one driving gear is constantly engaged with a driven gear. The dog transmission of the present teaching includes a constantly engaged transmission in which all driving gears are engaged with a driven gear, and dogs corresponding to one gear stage are engaged with each other.

The dog transmission of the present teaching is, for example, of a type which performs shifting operations including upshifting and downshifting using the power of the shift actuator, for example. In the case of this type, the shift actuator is controlled by a control device. The dog transmission is, for example, an automated manual transmission (AMT) shifting gears in response to a switching operation of a rider. However, the dog transmission of the present teaching is not particularly limited, and may be, for example, an automatic transmission AT performing a gear shifting operation according to the rotation speed and the required torque of the engine of the leaning vehicle.

Further, the dog transmission of the present teaching is not particularly limited, and may be, for example, of a type which upshifts by engaging and disengaging dogs using an operating force of a rider. In the case of this type, the control device can detect the upshift of the dog transmission by an operation of a rider through a sensor provided in the dog transmission.

The state of the clutch is changed between the connection state and the disconnection state. The state of the clutch includes an intermediate state between the connection state and the disconnection state. Changing the state of the clutch from the connection state includes bringing the state into the disconnection state or the intermediate state. An output of the clutch actuator changes the state of the clutch without driving the shifting operations of the dog transmission.

The control device contains a computer including a central processing unit (CPU) executing programs and a memory storing the programs, for example. However, the control device is not particularly limited and may contain an electronic circuit not executing programs.

The slip of the rear wheel refers to the fact that the rear wheel rotates in the rotation direction in traveling while the rear wheel rubs against the ground.

### Advantageous Effects of Invention

The present teaching can provide a leaning vehicle capable of shortening the grip recovery period associated with the upshift in a situation in which a rear wheel is slipping in a special environment, such as racing, while suppressing an increase in a period in which the driving force is not transmitted to the rear wheel in the upshift.

### Brief Description of Drawings

[FIG. 1] A diagram illustrating a leaning vehicle according to a first embodiment.
[FIG. 2] A time chart illustrating an operation of each part in upshift of the leaning vehicle illustrated in FIG. 1.
[FIG. 3] A flowchart illustrating operations of a control device in a second embodiment.
[FIG. 4] A time chart illustrating an operation of each part in upshift of control illustrated in FIG. 2.

### Description of Embodiments

Hereinafter, embodiments of the present teaching are described with reference to the drawings.

### [First Embodiment]

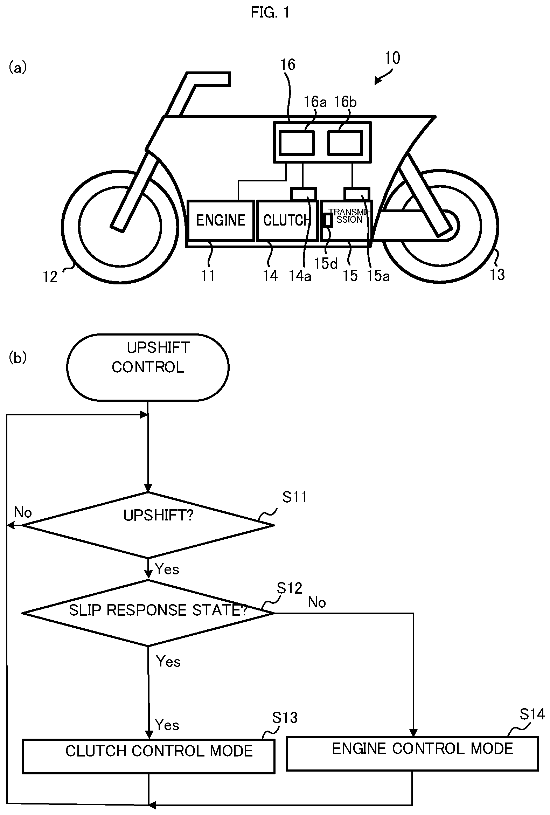

FIG. 1 is a diagram illustrating a leaning vehicle according to a first embodiment. Part (a) in FIG. 1 is a side view illustrating the overall configuration of the leaning vehicle. Part (b) in FIG. 1 is a chart illustrating upshift control.

A leaning vehicle 10 illustrated in part (a) in FIG. 1 includes an engine 11, a front wheel 12, a rear wheel 13, a clutch 14, a dog transmission 15 (transmission), and a control device 16.

The engine 11 outputs driving force.

The rear wheel 13 is a driving wheel. The rear wheel 13 rotates under the driving force of the engine 11.

The clutch 14 has a clutch actuator 14a. The clutch 14 changes the state of the driving force between a connection state and a disconnection state by actuation of the clutch actuator 14a.

The dog transmission 15 switches the gear stage. The dog transmission 15 upshifts by engaging and disengaging dogs 15d. The dog transmission 15 downshifts by engaging and disengaging the dogs 15d.

The dog transmission 15 transmits the driving force of the engine 11 as transmission driving force to the rear wheel 13 through the engaged dogs 15d. The dog transmission 15 includes a shift actuator 15a, for example. The dog transmission 15 upshifts or downshifts by the actuation of the shift actuator 15a. An output of the shift actuator 15a actuates an operation of the dog transmission 15 without actuating an operation of the clutch 14.

The control device 16 controls the engine 11 and the clutch actuator 14a. The control device 16 also controls the shift actuator 15a.

The control device 16 contains a computer including a central processing unit (CPU) 16a executing programs and a memory 16b storing the programs. The central processing unit 16a controls the engine 11 and the clutch actuator 14a by reading and executing the programs stored in memory 16b.

The control device 16 causes the shift actuator 15a to upshift or downshift the dog transmission 15 according to at least the rotation speed of the engine 11. This automatically switches the gear stage without relying on an operation of a rider. More specifically, the control device 16 causes the shift actuator 15a to upshift the dog transmission 15 based on a shift map in which at least the rotation speeds of the engine 11 and the gear stages are associated with each other.

The control device 16 adjusts the upshift characteristics in response to an operation of a rider. More specifically, the control device can set the state to an off-road mode in response to an operation of a rider. The control device 16 refers to an off-road shift map suitable for traveling in the off-road mode as the shift map in the off-road mode. The control device 16 refers to the off-road shift map as the shift map in the off-road mode, the off-road shift map which is a high-speed map in which rotation speeds higher than those in a control state other than the off-road mode are associated with gear stages.

The control device 16 can also upshift or downshift the dog transmission 15 in response to an operation of a rider, for example. The control device 16 causes the shift actuator 15a to upshift or downshift the dog transmission 15 in response to a shift switch operation by a rider, for example.

The control device 16 temporarily reduces the transmission driving force transmitted by the dogs 15d when the dog transmission 15 upshifts or downshifts. Thus, the dogs 15d corresponding to a gear stage before the switch can be disengaged and the dogs 15d corresponding to a gear stage after the switch can be engaged. The control device 16 switches an operation means for reducing the transmission driving force according to the slip response state of the leaning vehicle 10. More specifically, the control device 16 switches an engine control mode or a clutch control mode for the operation for reducing the transmission driving force according to the slip response state.

The slip response state indicates a state in which slip of the rear wheel is detected, for example. The slip of the rear wheel is detected as, for example, a case in which the rotation speed of the rear wheel 13 is higher than the rotation speed of the front wheel 12 and a speed difference between the front wheel 12 and the rear wheel 13 is larger than a speed difference reference value. However, as a method for detecting slip of the rear wheel, a case in which a variation in the speed difference between the front wheel 12 and the rear wheel 13 is larger than a reference value can also be adopted, for example. The transition to a control state assuming slip is performed in response to an operation of a rider, for example. The control state assuming slip is the off-road mode, for example.

Part (b) in FIG. 1 is a flowchart illustrating upshift control of the control device 16 illustrated in FIG. 1.

The control device 16 reduces the transmission driving force in the engine control mode (S14) when the leaning vehicle 10 is not in the slip response state (No in S12) in the upshift (Yes in S11). In the engine control mode (S14), the control device 16 causes the clutch actuator 14a to maintain the connection state of the clutch 14 and reduce the driving force of the engine 11 to thereby reduce the transmission driving force transmitted by the dogs 15d and disengage the dogs 15d.

The control device 16 reduces the transmission driving force in the clutch control mode (S13) when the leaning vehicle 10 is in the slip response state (Yes in S12) in the upshift (Yes in S11). In the clutch control mode (S13), the control device 16 causes the clutch actuator 14a to change the state of the clutch 14 from the connection state to reduce the transmission driving force to thereby disengage the dogs.

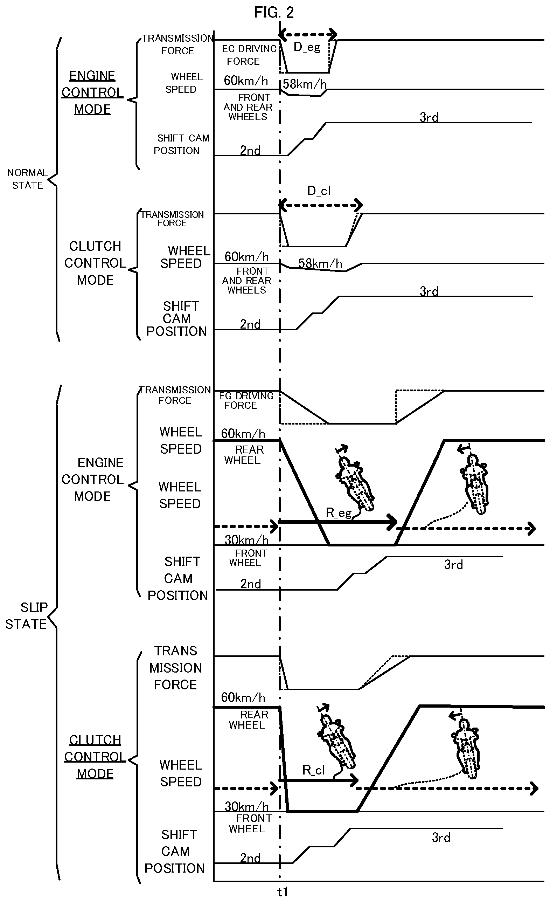

FIG. 2 is a time chart illustrating an operation of each part in the upshift of the leaning vehicle illustrated in FIG. 1.

The time chart in FIG. 2 illustrates an operation of each part in the engine control mode and in the clutch control mode in each of a normal state in which the rear wheel is not slipping and a slip state in which the rear wheel is slipping.

The chart in FIG. 2 illustrates the transmission driving force (transmission force) of the dogs 15d, the wheel speeds of the front and rear wheels, and the position of a shift cam as the specific operation of each part. The transmission driving force is also the driving force applied to the rear wheel through the dogs 15d. In addition to the transmission driving force, a change in an instruction controlling the transmission driving force is also illustrated. For example, in the engine control mode, a change in an output instruction to the engine 11 is also indicated by the broken line in addition to the transmission driving force. In the clutch control mode, a change in an operation instruction to the clutch actuator 14a is also indicated by the broken line in addition to the transmission driving force. The position of the shift cam shows an example of the rotation position of the shift cam from the time when the dogs corresponding to a shift gear before the upshift are disengaged to the time when the engagement of the dogs corresponding to a shift gear after the upshift is completed. As an example, to clarify the situation of the operation, the rotation position of the shift cam from the time when the dogs corresponding to a second gear are disengaged to the time when the engagement of the dogs corresponding to a third gear is completed is illustrated. A step appearing in the middle of the rotation position of the shift cam shows an example of a position when the top faces of the dogs 15d corresponding to a third gear temporarily collide with each other before the dogs 15d are fitted. As an example of the wheel speed to make it easy to concretely imagine the wheel situation, values in terms of the traveling speed are illustrated.

### <Engine control operation in normal state>

First, an engine control operation in the normal state is described. The engine control operation is an operation in the engine control mode.

At timing t1, a series of operations for the upshift starts. First, the control device 16 outputs an instruction to reduce an output to the engine 11 as indicated by the broken line. In response to the instruction, the engine 11 reduces the driving force. The engine 11 has inertia, and therefore the driving force of the engine 11 gradually decreases over time as indicated by the diagonal line unlike the change in the instruction indicated by the broken line. The driving force output from the engine 11 in the engine control operation is directly applied as the transmission driving force to the engaged dogs 15d.

In the example of the chart in FIG. 2, the front wheel 12 and the rear wheel 13 are rotating at 60 km/h before the upshift. The description is given using the values in terms of the traveling speed as the rotation speed. In the normal state, the front wheel and the rear wheel are rotating at substantially the same speed. Therefore, immediately after the driving force output from the engine 11 positioned upstream in a transmission path of the driving force decreases, the transmission driving force rapidly decreases to near zero in a short time. The decrease in the transmission driving force to near zero enables the disengagement of the dogs 15d.

At the timing when the transmission driving force decreases to near zero, the control device 16 controls the shift actuator 15a to rotate the shift cam to thereby disengage the dogs 15d corresponding to the second gear, and then engage the dogs 15d corresponding to the third gear.

At the timing when the engagement of the dogs 15d corresponding to the third gear is completed, the control device 16 outputs an instruction to increase and recover the output to the engine 11 as indicated by the broken line of the transmission force. In response to the instruction, the engine 11 increases the driving force. This increases the transmission driving force. In addition, the speeds of the front wheel 12 and the rear wheel 13 are also recovered.

Thus, the series of operations for the upshift is completed. Although the actual wheel speeds vary before and after the upshift, the effect in the description of the upshift operation is small, and therefore this difference is disregarded in the description.

In the engine control operation, the driving force of the engine 11 decreases during a period Deg from the start of the decrease in the driving force of the engine 11 to the completion of the recovery of the driving force of the engine 11, and, in this period, the vehicle speed decreases.

### <Clutch control operation in normal state>

Next, a clutch control operation in the normal state is described as a reference example. The clutch control operation is an operation in the clutch control mode.

At the timing t1, a series of operations for the upshift starts. First, the control device 16 outputs an instruction to the clutch actuator 14a to bring the clutch 14 into the disconnection state as indicated by the broken line. In response to the instruction, the clutch 14 enters the disconnection state. The driving force transmitted from the engine 11 through the clutch 14 gradually decreases over time as indicated by the diagonal line unlike the change in the instruction indicated by the broken line.

Also, in the case of the clutch control operation, the clutch 14 enters the disconnection state, so that the transmission driving force rapidly decreases to near zero in a short time. The decrease in the transmission driving force to near zero enables the disengagement of the dogs 15d.

At the timing when the transmission driving force decreases to near zero, the control device 16 controls the shift actuator 15a to disengage the dogs 15d corresponding to the second gear, and then engages the dogs 15d corresponding to the third gear.

At the timing when the engagement of the dogs 15d corresponding to the third gear is completed, the control device 16 outputs an instruction to the clutch actuator 14a to bring the clutch 14 into the connection state as indicated by the broken line. More specifically, the control device 16 brings the clutch 14 into the connection state passing through a half-clutch state. For example, the control device 16 outputs an instruction to the clutch actuator 14a to gradually bring the clutch 14 into the connection state. Therefore, the driving force transmitted by the clutch 14 gradually increases. This also recovers the speeds of the front wheel 12 and the rear wheel 13.

Thus, the series of operations for the upshift is completed.

In the clutch control operation, the transmission driving force decreases during a period Dcl from the start of the change in the state of the clutch 14, which is in the connection state to the recovery to the connection state, and, in this period, the vehicle speed decreases.

The period Deg in which the driving force decreases by the engine control operation is shorter than the period Dcl in which the driving force decreases by the clutch control operation.

### <Engine control operation in slip state>

Next, an engine control operation in the slip state is described as a reference.

At the timing t1, a series of operations for the upshift starts. First, the control device 16 outputs an instruction to reduce the output to the engine 11 as indicated by the broken line. In response to the instruction, the engine 11 reduces the driving force. The engine 11 has inertia, and therefore the driving force of the engine 11 gradually decreases over time as indicated by the diagonal line unlike the change in the instruction indicated by the broken line.

The rear wheel 13 in the slip state is rotating at a speed higher than that of the front wheel. The front wheel is not slipping, and therefore reflects the actual traveling speed of the leaning vehicle 10. For example, before the upshift, the front wheel is rotating at a speed in terms of a traveling speed of 30 km/h, and the rear wheel is rotating at a speed in terms of a traveling speed of 60 km/h. At this time, the rear wheel 13 rotates at a speed higher than that of the front wheel, because the rear wheel 13 receives the driving force, which is larger than frictional resistance force of the road surface, from the engine 11 while being subjected to the frictional resistance force.

Even when the speed of the rear wheel 13 decreases due to the decrease in the driving force from the engine 11, the dogs 15d continue to transmit the driving force until the speed of the rear wheel 13 becomes less than or equal to the speed of the front wheel 12. Thus, until the speed of the rear wheel 13 becomes less than or equal to the speed of the front wheel 12, the transmission driving force is applied to the engaged dogs 15d, and therefore the dogs 15d cannot be disengaged. When the speed of the rear wheel 13 decreases to be less than or equal to the speed of the front wheel 12, the transmission driving force decreases to near zero, enabling the disengagement of the dogs 15d.

At the timing when the transmission driving force decreases to near zero, the control device 16 controls the shift actuator 15a to disengage the dogs 15d corresponding to the second gear, and then engages the dogs 15d corresponding to the third gear.

At the timing when the engagement of the dogs 15d corresponding to the third gear is completed, the control device 16 outputs an instruction to increase the output to the engine 11 as indicated by the broken line. In response to the instruction, the engine 11 recovers the driving force.

As described above, when the control device 16 outputs an instruction to reduce the output to the engine 11 at the timing t1, the engine 11 starts to decelerate. However, the engine 11 has inertia, and therefore the decrease amount per unit time in the rotation speed is kept small. More specifically, the rotation speed gradually decreases. Therefore, it takes a long time until the speed of the rear wheel 13 becomes less than or equal to the speed of the front wheel 12 and the disengagement of the dogs 15d is enabled.

At the timing t1, the rotation of the engine 11 starts to decelerate, and the speed of the rear wheel 13 also starts to decrease. Therefore, the slip state of the rear wheel 13 starts to eliminate from the timing t1. More specifically, the slip state changes toward convergence. For example, when the leaning vehicle 10 is leaning while power sliding, the lean angle decreases as the slip state of the rear wheel 13 changes toward the elimination from the timing t1. More specifically, the power sliding is interrupted, and the attitude of the leaning vehicle 10 changes to rise. The change toward the elimination of the slip state of the rear wheel 13 continues during a period R_eg from the start of the decrease in the transmission driving force to the start of an increase in the transmission driving force. More specifically, this change continues during the period R_eg from the start of the decrease in the driving force of the engine 11 to the start of the increase in the driving force of the engine 11. When the increase in the driving force of the engine 11 starts, the slip state of the rear wheel 13 then progresses, resulting in an increase in the lean angle. More specifically, the power sliding starts again.

### <Clutch control operation in slip state>

Next, a clutch control operation in the slip state is described.

At the timing t1, a series of operations for the upshift starts. First, the control device 16 outputs an instruction to the clutch actuator 14a to bring the clutch 14 into the disconnection state as indicated by the broken line. In response to the instruction, the clutch 14 enters the disconnection state. The driving force transmitted through the clutch 14 from the engine 11 decreases as indicated by the diagonal line.

However, when the clutch 14 enters the disconnection state, a transmission path of the driving force from the clutch 14 to the rear wheel 13 is released from the inertia of the engine 11, and therefore the friction resistance from the road surface becomes dominant at the rear wheel 13.

Although the rear wheel 13 in the slip state is rotating at a speed higher than that of the front wheel, the rotation speed of the rear wheel 13, which is not affected by the inertia of the engine 11, rapidly decreases as compared with that in the case of the engine control operation. For example, the speed of the rear wheel 13 rapidly decreases from 60 km/h to 30 km/h which is the same as that of the front wheel 12. The rotation speed of the rear wheel 13 becomes less than or equal to that of the front wheel 12 in a short time. When the speed of the rear wheel 13 decreases to be less than or equal to the speed of the front wheel 12, the transmission driving force reduces to near zero. The decrease in the transmission driving force to near zero enables the disengagement of the dogs 15d.

At the timing when the transmission driving force decreases to near zero, the control device 16 controls the shift actuator 15a to disengage the dogs 15d corresponding to the second gear, and then engages the dogs 15d corresponding to the third gear.

At the timing when the engagement of the dogs 15d corresponding to the third gear is completed, the control device 16 causes the clutch actuator 14a to bring the clutch 14 into the connection state as indicated by the broken line. The control device 16 brings the clutch 14 into the connection state passing through a half-clutch state. The control device 16 outputs an instruction to gradually bring the clutch 14 into the connection state to the clutch actuator 14a. This gradually increases the driving force transmitted by the clutch 14. This also recovers the speeds of the front wheel and the rear wheel.

At the timing t1, the rotation of the engine 11 starts to decelerate, and the speed of the rear wheel 13 also starts to decrease. Therefore, the slip state of the rear wheel 13 changes to elimination from the timing t1. More specifically, the slip state of the rear wheel 13 changes toward convergence.

For example, when the leaning vehicle 10 is leaning while power sliding, the transmission driving force starts to decrease and the speed of the rear wheel 13 also starts to decrease at the timing t1, and the lean angle decreases as the slip state of the rear wheel 13 changes toward the elimination. More specifically, the attitude of the leaning vehicle 10 changes to rise. The change in the slip state of the rear wheel 13 toward the elimination continues during a period R_cl during which the state of the clutch 14 starts to change toward the connection state. When the state of the clutch 14 starts to change toward the connection state, the slip state of the rear wheel 13 then progresses, resulting in an increase in the lean angle.

As described above, in the clutch control operation, when the control device 16 outputs an instruction to the shift actuator 15a to disconnect the clutch 14 at the timing t1, the clutch 14 starts to disconnect. However, the rotation of the rear wheel 13 is not affected by the inertia of the engine 11, and therefore the decrease amount per unit time in the rotation speed is large. More specifically, the rotation speed sharply decreases. Thus, the time until the speed of the rear wheel 13 becomes less than or equal to the speed of the front wheel 12, enabling the disengagement of the dogs 15d, is short.

The control device 16 of this embodiment performs the operation for reducing the transmission driving force in the clutch control mode when the leaning vehicle 10 is in the slip response state as described with reference to part (b) in FIG. 1. The control device 16 causes the clutch actuator 14a to change the state of the clutch from the connection state to reduce the transmission driving force to thereby eliminate the slip of the rear wheel 13 and disengage the dogs 15d in the clutch control mode. When the rear wheel 13 is slipping, there is a large speed difference between the rotation speed of the rear wheel 13 before the driving force of the engine 11 decreases and the speed corresponding to the vehicle speed of the leaning vehicle 10. The rear wheel 13 is rotating while slipping at a speed higher than the speed corresponding to the vehicle speed under the driving force of the engine 11 received through the dogs 15d. When the rotation speed of the rear wheel 13 becomes less than or equal to the speed corresponding to the vehicle speed, the transmission driving force of the dogs 15d decreases to the extent that the disengagement is enabled. In the clutch control mode, the disconnection of the clutch rapidly causes a decrease in the transmission driving force transmitted through the dogs. The rotation speed of the rear wheel 13 rapidly decreases to fall below the speed corresponding to the vehicle speed, so that the force applied to the engaged dogs 15d rapidly decreases. This enables the disengagement of the dogs 15d.

In a situation in which the rotation speed of the rear wheel 13 decreases, the slip of the rear wheel 13 decreases toward the elimination. The decrease in the slip of the rear wheel 13 means that the grip of the rear wheel is recovered. For example, when the leaning vehicle 10 upshifts in the power sliding situation, the grip of the rear wheel 13 recovers, so that the leaning vehicle 10 rises toward an upright state from the lean state.

The engine 11, which supplies the transmission driving force, itself has inertia. Therefore, when the connection state of the clutch is maintained in the engine control mode, the decrease amount of the speed, i.e., deceleration, of the rear wheel 13 is suppressed due to the inertia even when the driving force of the engine 11 decreases. This prolongs the period R_eg during which the rotation speed of the rear wheel 13 falls below the speed corresponding to the vehicle speed. More specifically, for example, the period in which the leaning vehicle 10 which is power sliding rises from the lean state is long.

In contrast, when the state of the clutch 14 is changed from the connection state in the clutch control mode, the transmission driving force transmitted by the dogs 15d is released from the inertia of the engine 11, resulting in a large deceleration of the rear wheel 13.

The rate at which the transmission driving force decreases in the clutch control mode is higher than the rate at which the transmission driving force decreases in the engine control mode, making it possible to shorten the grip recovery period. More specifically, for example, the period in which the leaning vehicle 10 rises from the lean state is short.

When the leaning vehicle 10 of this embodiment is not in the slip response state, the engine control mode suppresses the increase in the period in which the driving force is not transmitted to the rear wheel in the upshift, and, when the leaning vehicle 10 is in the slip response state, the clutch control mode can keep the grip recovery period associated with the upshift shorter.

### [Second Embodiment]

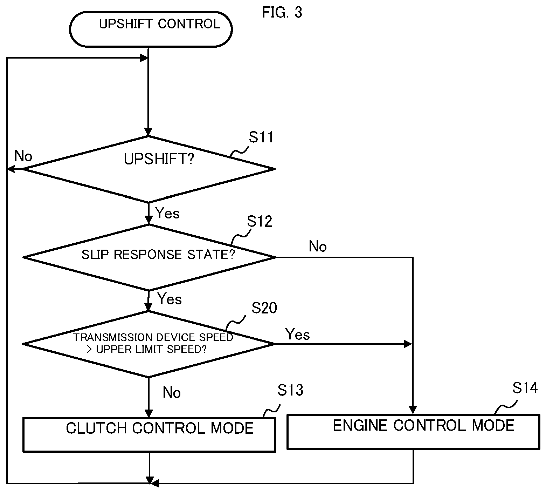

FIG. 3 is a flowchart illustrating operations of a control device in a second embodiment.

In a case in which the dog transmission 15 upshifts (Yes in S11), the control device 16 of this embodiment reduces the transmission driving force in the engine control mode when the leaning vehicle 10 is in the slip response state (Yes in S12) and when the rotation speed of the dog transmission 15 exceeds a predetermined upper limit speed (Yes in S20) (S14). The control device 16 causes the clutch actuator 14a to maintain the connection state of the clutch 14 and reduce the driving force of the engine 11 to thereby disengage the dogs 15d in the engine control mode. Herein, the rotation speed of the dog transmission 15 is the rotation speed of a so-called main shaft coupled with the clutch 14. However, the determination target is not limited to the rotation speed of the main shaft, and the rotation speed of a shaft coupled with the rear wheel 13 may also be adopted.

The other points in this embodiment are the same as those in the first embodiment. Therefore, the same reference signs are attached to elements common to those in the first embodiment and the descriptions thereof are omitted.

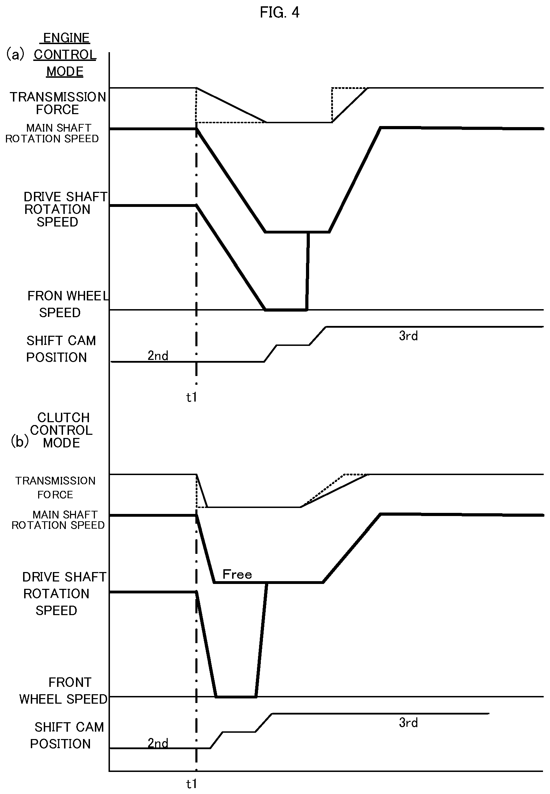

FIG. 4 is a time chart illustrating an operation of each part in the upshift of the control illustrated in FIG. 2.

FIG. 4 illustrates an operation in the engine control mode when the leaning vehicle 10 is in the slip response state and the rotation speed of the dog transmission 15 exceeds the upper limit speed. Part (a) in FIG. 4 illustrates the operation in the engine control mode as described in this embodiment. Part (b) in FIG. 4 illustrates an operation when the clutch control mode is adopted as a reference example.

The scale of the horizontal axis in the time chart in FIG. 4 is enlarged as compared with that of the time chart illustrated in FIG. 2. The time chart in FIG. 4 illustrates the rotation speed of a main shaft and the rotation speed of a drive shaft. The main shaft is a shaft rotating in conjunction with the output of the clutch 14 in the dog transmission 15. The drive shaft is a shaft rotating in conjunction with the rear wheel 13 in the dog transmission 15.

In the time chart in FIG. 4, the rotation speed of the drive shaft is illustrated in terms of the speed of the rear wheel. The height of the display position of the rotation speed of the drive shaft in the time chart is offset to be displayed at the same height as that of the rotation speed of the main shaft when the dogs 15d of the third gear are engaged.

The control device 16 in this embodiment performs control in the engine control mode when the leaning vehicle 10 is in the slip response state and when the rotation speed of the dog transmission 15 exceeds the upper limit speed as described with reference to FIG. 3.

Specifically, the control device 16 causes the clutch actuator 14a to maintain the connection state of the clutch 14 and reduce the driving force of the engine 11 to thereby disengage the dogs 15d.

For example, at the timing t1, the control device 16 starts the decrease in the driving force of the engine 11. As the driving force decreases, both the rotation speed of the main shaft and the rotation speed of the drive shaft of the dog transmission 15 decrease. At the timing when the speed of the rear wheel 13 corresponding to the rotation speed of the drive shaft becomes less than or equal to the speed of the front wheel 12, the control device 16 disengages the dogs 15d corresponding to the gear stage before the upshift, and then engages the dogs 15d corresponding to the gear stage after the upshift. For example, the control device 16 disengages the dogs 15d corresponding to the second gear. Subsequently, the control device 16 engages the dogs 15d corresponding to the third gear. There is a speed difference between the rotation speed corresponding to the second gear and the rotation speed corresponding to the third gear in the main shaft. The dogs 15d corresponding to the third gear collide with each other with this speed difference in the engagement.

When the rotation speed of the dog transmission 15 exceeds the above-described upper limit speed, the clutch 14 enters the disconnection state when the control device 16 operates in clutch control mode.

Thereafter, when the dogs 15d corresponding to the second gear are disengaged, the main shaft is released from the drive of the engine 11 and is also released from the drive of the rear wheel 13 through the drive shaft. Therefore, after the dogs 15d corresponding to the second gear are disengaged, the main shaft enters a no-load rotation state, and the decrease in the rotation speed stops. More specifically, the main shaft gradually decelerates only due to the rotational resistance to which the main shaft itself is subjected, but the no-load rotation state substantially maintains the rotation speed when observed in a short time. In contrast, the speed of the drive shaft coupled with the rear wheel 13 continues to decrease as the rear wheel 13 decelerates due to the frictional force between the rear wheel 13 and the ground.

This increases a difference in the rotation speed between the main shaft in the no-load rotation state and the drive shaft decelerating in synchronization with the rear wheel 13 at a speed which is less than or equal to the speed of the front wheel 12. As a result, a difference in the rotation speed between the main shaft and the drive shaft when the dogs 15d corresponding to the third gear are engaged is large. When the dogs of the main shaft in a free-running state corresponding to a new gear stage after the upshift and dogs of a drive shaft which has decelerated in conjunction with the rear wheel 13 are engaged with each other, the dogs 15d collide with each other with a large rotation speed difference. When the dogs 15d collide with each other with a large rotation speed difference, wear of the dogs 15d sometimes progresses. Further, the dogs 15d sometimes bounce off each other.

According to this embodiment, when the rotation speed of the dog transmission 15 exceeds the upper limit speed during slip of the rear wheel 13, the driving force of the engine 11 decreases while the connection state of the clutch 14 is being maintained, so that the dogs 15d are disengaged. This suppresses the occurrence of the collision of the dogs 15d with a large rotation speed difference. Thus, the grip recovery period associated with the upshift in the situation in which the rear wheel 13 is slipping can be kept short and the wear of the dogs 15d due to the collision of the dogs 15d with a large rotation speed difference can be suppressed.

### Reference Signs List

- 10:: leaning vehicle
- 11:: engine
- 12:: front wheel
- 13:: rear wheel
- 14:: clutch
- 14a:: clutch actuator
- 15:: dog transmission
- 15a:: shift actuator
- 15d:: dog
- 16:: control device

## Claims

1. A leaning vehicle (10) comprising:
an engine (11) configured to output driving force;
a front wheel (12);
a rear wheel (13) configured to rotate under the driving force of the engine (11);
a clutch (14) having a clutch actuator (14a) and configured to change a state of the driving force between a connection state and a disconnection state by actuation of the clutch actuator (14a);
a dog transmission (15) configured to upshift by engaging and disengaging dogs (15d) and transmit the driving force transmitted from the clutch (14) as transmission driving force to the rear wheel (13) through the dogs (15d), which have been engaged; and
a control device (16) configured to control the engine (11) and the clutch actuator (14a), wherein
when the dog transmission (15) upshifts, the control device (16) is configured to switch between an engine control mode and a clutch control mode for an operation for reducing the transmission driving force according to a slip response state indicating detection of slip of the rear wheel (13) or transition to a control state assuming slip by an operation,
when the leaning vehicle (10) is not in the slip response state, the control device (16) is configured to cause the clutch actuator (14a) to maintain a connection state of the clutch (14) and reduce the driving force of the engine (11) to thereby disengage the dogs (15d) in the engine control mode, and
when the leaning vehicle (10) is in the slip response state, the control device (16) is configured to cause the clutch actuator (14a) to change a state of the clutch (14) from the connection state to reduce the transmission driving force to thereby eliminate the slip of the rear wheel (13) and disengage the dogs (15d) in the clutch control mode.

2. The leaning vehicle (10) according to claim 1, wherein
when the dog transmission (15) upshifts, the control device (16) is configured to cause the clutch actuator (14a) to maintain the connection state of the clutch (14) and reduce the driving force of the engine (11) to thereby disengage the dogs (15d) when the leaning vehicle (10) is in the slip response state and when a rotation speed of the dog transmission (15) exceeds a predetermined upper limit speed.

3. The leaning vehicle (10) according to claim 1 or 2, wherein
the dog transmission (15) has a shift actuator (15a) configured to engage and disengage the dogs (15d),
the control device (16) is configured to cause the shift actuator (15a) to upshift the dog transmission (15) based on a shift map in which at least rotation speeds of the engine (11) and gear stages are associated with each other, and
the control state assuming slip is an off-road mode in which an off-road shift map having gear shift characteristics suitable for off-road use is referred to as the shift map.
